# EUROPÄISCHE PATENTSCHRIFT

(11) **EP 3 659 710 B1**
(45) Veröffentlichungstag und Bekanntmachung des Hinweises auf die Patenterteilung: **14.08.2024**
(21) Anmeldenummer: 19204082.2
(22) Anmeldetag: 18.10.2019
(51) Int. Cl.: B03D 1/14

(54) **FLOTATIONSVORRICHTUNG**
FLOTATION DEVICE
DISPOSITIF DE FLOTTAISON

(30) Priorität: 19.11.2018 DE 102018128951
(43) Veröffentlichungstag der Anmeldung: 03.06.2020
(73) Patentinhaber: Valmet Technologies Oy, 02150 Espoo (FI)
(72) Erfinder: Ohlenschläger, Peter, 67657 Kaiserslautern (DE)
(74) Vertreter: Wesch, Arno

(56) Entgegenhaltungen:
- GB-A- 2 024 192
- US-A- 2 242 139
- US-A- 3 542 675
- US-A- 3 679 056
- US-A- 4 935 154
- US-A1- 2004 031 742

## Beschreibung

Die Erfindung betrifft eine Flotationsvorrichtung nach dem Oberbegriff des Patentanspruchs 1.

Die US 3,542,675 A zeigt ein Verfahren zur Trennung von Flüssigkeiten und Feststoffen unter Verwendung eines variablen Venturiventils und eines Flussratenkontrollventils. Die US 2004/0031742 A1 zeigt Flüssigkeitsmischer, die den Venturieffekt nutzen, um Gas in eine Flüssigkeit zu saugen. Aus der US 4,935,154 A ist ein Verfahren zur Trennung von Öl und Wasser bekannt, bei dem Venturidüsen Gas ansaugen. Die US 2,242,139 A und die GB 2 024 192 A zeigen Verfahren, bei denen Düsen verwendet werden, denen Ventile zugeordnet sind. Die US 3,679,056 A zeigt eine Flotationsvorrichtung mit einem Mischventil.

Aus dem Stand der Technik ist es bekannt, Gase durch Wasser zu waschen bzw. nass-elektrostatisch abzuscheiden, nämlich von Partikeln zu befreien. Wasser bzw. eine Waschlösung, welches bzw. welche die Partikel aufgenommen hat, muss gereinigt werden, um wieder einem Prozess zur Verfügung stehen zu können. Vor diesem Hintergrund ist insbesondere bekannt, Zentrifugen zu verwenden, welche Schwebstoffe und Partikel aus dem Wasser abscheiden.

Eine dichte Phase oder eine eingedickte Phase, wird üblicherweise zur Zentrifuge geführt. Obwohl eine Zentrifuge sich mit bis zu 3.800 Umdrehungen pro Minute drehen kann, ist die Qualität der Reinigung nicht besonders gut, da nur größere Partikel abgeschieden werden und das Wasser einen hohen Feinstoffanteil behält.

Es verbleiben ca. 40 bis 50 % der Partikel im gereinigten Wasser. Bei der Verwendung einer Zentrifuge ist insbesondere nachteilig, dass diese sehr verschleißanfällig ist und einen hohen Instandhaltungsbedarf aufweist. Hiermit gehen hohe Kosten einher. Weiter ist nachteilig, dass eine Anlage, auch eine Produktionsanlage, dann längere Zeit ruht, wenn eine Zentrifuge gewartet werden muss und Instandsetzungsarbeiten erforderlich werden. Des Weiteren verursachen Zentrifugen bzw. Dekanter einen hohen elektrischen Energieaufwand.

Vor diesem Hintergrund ist aus der DE 20 2015 102 572 U1 bekannt geworden zur Reinigung von Wasser eine Flotationsvorrichtung zu verwenden, die Mikroblasen aus Luft erzeugt. Die Mikroblasen nehmen Partikel im Wasser an dessen Oberfläche mit. An der Oberfläche entsteht so ein schwimmfähiges Flotat, nämlich ein Feststoff-Luft-Flocken-Gemisch.

Die Mikroblasen entstehen, wenn in Wasser gelöste Luft aufgrund einer Druckabsenkung aus dem Wasser entweicht. In einem Sättiger wird Luft zunächst in Wasser gelöst, indem innerhalb des Sättigers ein Druck herrscht, der weit über dem Atmosphärendruck liegt. Sobald das unter Druck stehende Wasser-Luft-Gemisch über Ventile in das Flotationsbecken eingeleitet wird, entweicht die Luft in Form von Mikroblasen, da das Wasser-Luft-Gemisch nicht mehr unter Druck steht.

Die Verwendung von Ventilen, insbesondere einer Vielzahl von Ventilen, ist jedoch apparativ aufwendig, da diese geeignet angesteuert und ebenfalls gewartet werden müssen. Auch hiermit gehen Kosten einher. Des Weiteren stellen Ventile potentielle Schwachstellen dar, an denen es zu Leckagen kommen kann. Des Weiteren sind Ventile verschleißanfällig.

Der Erfindung liegt daher die Aufgabe zugrunde, eine Flotationsvorrichtung anzugeben, in deren Flotationsbecken ein unter Druck stehendes Flüssigkeits-Luft-Gemisch möglichst zuverlässig und möglichst homogen einbringbar ist.

Die vorliegende Erfindung löst diese Aufgabe mit den Merkmalen des Patentanspruchs 1.

Erfindungsgemäß ist erkannt worden, dass mindestens ein Einspeiser mit einem Strömungskanal, der längs seiner Erstreckung unterschiedliche Strömungsquerschnittsflächen aufweist, die Verwendung eines Ventils, welches selbständig pneumatisch, elektrisch oder elektropneumatisch einen Strömungskanal mechanisch absperrt, öffnet oder regelt, überflüssig macht. Der Druck innerhalb der Leitung, die vom Sättiger wegführt, kann bei geeigneter Wahl der Strömungsquerschnittsflächen im Wesentlichen erhalten oder sogar konstant bleiben.

Es findet gerade kein wesentlicher Druckverlust statt, wenn das unter Druck stehende Flüssigkeits-Gas-Gemisch in die sich bereits im Flotationsbecken befindliche Flüssigkeit einströmt. Es sind keine Ventile notwendig, welche die Flüssigkeit im Inneren des Flotationsbeckens vom unter Druck stehenden Flüssigkeits-Gas-Gemisch mechanisch abtrennen.

Sobald das unter Druck stehende Flüssigkeits-Gas-Gemisch in das Flotationsbecken einströmt, findet dort eine Entspannung statt, so dass Mikroblasen des ausgasenden Gases ein Flotat an der Oberfläche des Flotationsbeckens erzeugen.

Der Einspeiser weist eine Venturidüse auf oder ist als solche ausgebildet. Venturidüsen sind besonders gut geeignet, um ein unter Druck stehendes Flüssigkeits-Gas-Gemisch in das Flotationsbecken zu leiten und dieses dabei geeignet zu entspannen, so dass ein Druckabfall in einer Leitung nicht zu groß wird. Der Venturieffekt wird genutzt, um auf schließende Ventile zu verzichten.

Die Leitung, die vom Sättiger wegführt, nämlich eine Verteilleitung, erstreckt sich zumindest abschnittsweise um das Flotationsbecken herum, wobei die Leitung ohne Zwischenschaltung eines Ventils in mehrere Einspeiser mündet, die voneinander beabstandet an oder in der Außen- oder Innenwand des Flotationsbeckens angeordnet sind. Hierdurch kann das Flüssigkeits-Gas-Gemisch an verschiedenen Stellen in das Flotationsbecken eingebracht werden und ein Flotat möglichst homogen im Flotationsbecken verteilt erzeugen.

Der Einspeiser oder jeder Einspeiser mündet in eine Injektorlanze, welche in das Innere des Flotationsbeckens ragt, wobei dem in das Innere ragenden Ende der Injektorlanze ein konvexes Prallblech, nämlich ein Prallverteiler, zugeordnet ist. Durch Injektorlanzen kann das Flüssigkeits-Gas-Gemisch gut im Inneren und in der Tiefe des Flotationsbeckens verteilt werden. Durch die Ausbildung der Prallbleche wird das ausgasende Gas in feine Blasen verteilt, wenn das Flüssigkeits-Gas-Gemisch auf diese auftrifft. Der Einspeiser kann die Wandung des Flotationsbeckens durchgreifen und in eine Injektorlanze münden. Durch das Auftreffen auf die Prallbleche wird der im Zweistoffgemisch enthaltene Luft-Sauerstoff in kleine Blasen zerstäubt bzw. zerkleinert.

Es könnte ein Zulaufverteiler zum Einbringen von zu reinigender Flüssigkeit in das Flotationsbecken vorgesehen sein, wobei sich der Zulaufverteiler zumindest teilweise längs einer Außen- oder Innenwand des Flotationsbeckens erstreckt und mit Schlitzen versehen ist. Durch einen Zulaufverteiler kann die zu reinigende Flüssigkeit längs einer Strecke über die gesamte Breite in das Flotationsbecken über die Schlitze eingebracht bzw. homogen verteilt eingeströmt werden.

Die Schlitze könnten als Längsschlitze ausgebildet sein, welche derart angeordnet sind, dass die zu reinigende Flüssigkeit unter einem Winkel von 5 bis 50° gegen die Horizontale geneigt in das Flotationsbecken homogen einleitbar ist. Hierdurch erfolgt eine Durchmischung der Flüssigkeit, die sich schon im Flotationsbecken befindet. Anstelle von Schlitzen könnten auch andere Durchgänge, wie beispielsweise Löcher, ovale Öffnungen oder Öffnungen mit anderer Geometrie, vorgesehen sein.

In einem oberen Bereich des Flotationsbeckens könnte ein Flotaträumer angeordnet sein.

Alternativ oder zusätzlich könnte in einem unteren Bereich des Flotationsbeckens ein Sedimenträumer angeordnet sein. Durch einen Flotaträumer kann Flotat, welches sich an der Oberfläche der Flüssigkeit im Flotationsbecken angesammelt hat, abgeführt werden. Durch den Sedimenträumer kann Sediment am Boden des Flotationsbeckens abgeführt werden.

An den Flotaträumer könnte sich eine obere geneigte Rampe mit einer Länge von bevorzugt 50 bis 80 cm anschließen, auf welche Flotat durch den Flotaträumer aufbringbar ist. Da die Rampe geneigt ist, wird Flotat auf der Rampe entwässert, bevor es zu einem Entwässerungscontainer abgeführt wird.

Es könnte ein Überlaufwehr in Form eines ersten Beckens vorgesehen sein, in welches bereits vorgereinigte Flüssigkeit hineinströmen kann, bevor diese in ein zweites Becken hineinströmt. Durch das Überlaufwehr kann der Pegel der Flüssigkeit im Flotationsbecken gut eingeregelt werden, so dass der Flotaträumer das Flotat gut ergreifen und abführen kann. Durch die Justierung des Überlaufwehrs kann ein Trockensubstanzgehalt entsprechenden Anforderungen angepasst werden.

Die hier beschriebene Flotationsvorrichtung kann bevorzugt in der Holz verarbeitenden Industrie, in Energieerzeugungsanlagen, in der Glas- oder Mineralwolleindustrie oder in der Industrie allgemein verwendet werden.

Bei der Verwendung der beschriebenen Flotationsvorrichtung ist von besonderem Vorteil, dass am Boden angereichertes Sediment und an der Flüssigkeitsoberfläche sich befindendes Flotat in den gleichen Entwässerungscontainer fallen und einen bereits relativ hohen Trockengehalt aufweisen.

In der Zeichnung zeigen
- Fig. 1: oben eine teilweise geschnittene und schematische Darstellung einer Flotationsvorrichtung, bei welcher Venturidüsen verwendet werden, um ein Flüssigkeits-Gas-Gemisch in das Flotationsbecken einzubringen, und unten eine geschnittene Ansicht eines Entwässerungscontainers, der Flotat aus der Flotationsvorrichtung aufnimmt,
- Fig. 2: oben in schematischer Darstellung einen Flockulator, in den Flüssigkeit aus einem Dickstofftank eingeleitet wird, unten links eine Koagulationsmitteldosiereinrichtung und unten rechts eine Flockungsmitteldosiereinrichtung,
- Fig. 3: oben eine perspektivische Ansicht der Flotationsvorrichtung und unten eine Seitenansicht der Flotationsvorrichtung gemäß Fig. 1, und
- Fig. 4: oben eine weitere Seitenansicht der Flotationsvorrichtung gemäß Fig. 1, unten links eine Ansicht auf den Zulaufverteiler und unten links eine Ansicht auf das Überlaufwehr.

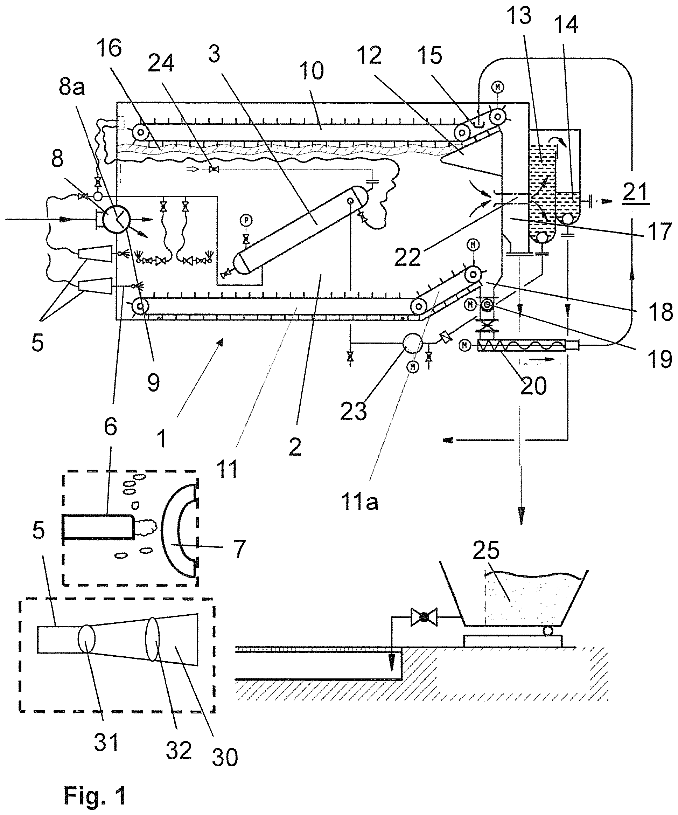

Fig. 1 zeigt eine Flotationsvorrichtung 1, umfassend ein Flotationsbecken 2 zum Aufnehmen von zu reinigender Flüssigkeit und einen Sättiger 3, zum Aufnehmen eines unter Druck stehenden Flüssigkeits-Gas-Gemischs, wobei vom Sättiger 3 eine Leitung 4, nämlich eine Verteilleitung, zu mindestens einem Einspeiser 5 führt, durch welchen das unter Druck stehende Flüssigkeits-Gas-Gemisch in das Flotationsbecken 2 einleitbar ist.

Der Einspeiser 5 weist bzw. alle Einspeiser 5 weisen einen Strömungskanal 30 auf, der längs seiner Erstreckung unterschiedliche Strömungsquerschnittsflächen 31, 32 aufweist.

Der Einspeiser 5 weist bzw. jeder Einspeiser 5 weisen je eine Venturidüse auf oder ist bzw. sind als solche ausgebildet. Dies ist unten links in Fig. 1 schematisch dargestellt.

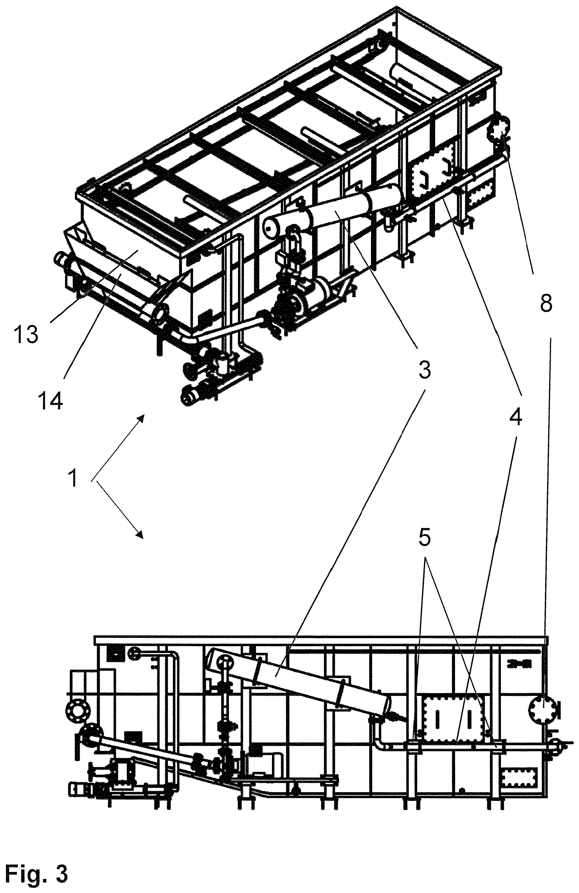

Fig. 3 zeigt besonders anschaulich, dass sich die Leitung 4 zumindest abschnittsweise um das Flotationsbecken 2 herum erstreckt, wobei die Leitung 4 ohne Zwischenschaltung eines Ventils in mehrere Einspeiser 5 mündet, die voneinander beabstandet an oder in der Außenwand des Flotationsbeckens 2 angeordnet sind.

Fig. 1 zeigt insbesondere in der mittleren gestrichelt dargestellten Detailansicht, dass der Einspeiser 5 in eine Injektorlanze 6 mündet, welche in das Innere des Flotationsbeckens 2 ragt, wobei dem in das Innere ragenden Ende der Injektorlanze 6 ein konvexes Prallblech 7, nämlich ein Prallverteiler, zugeordnet ist. Die konvexe Seite des Prallblechs 7 ist dem Ende der Injektorlanze 6 zugewandt.

Mehrere Injektorlanzen 6 sind mit den Einspeisern 5 mittels Venturidüsen verbunden. Es ist ganz konkret kein Ventil vorgesehen, welches die Verbindung zwischen der Leitung 4 und dem Inneren des Flotationsbeckens 2 begrenzt. Der Fachmann würde erwarten, dass eine Zuleitung der unter Druck stehenden Flüssigkeit aus der Leitung 4 in das Flotationsbecken 2 zu einem sofortigen Druckabfall führen würde. Hierdurch würde die in das Flotationsbecken 2 einströmende Flüssigkeit fast nicht mehr unter Druck stehen, so dass ein effektives Ausgasen von Luft-Sauerstoff nicht möglich wäre.

Durch das Vorsehen der Venturidüsen wird der Druck in der Leitung 4 im Wesentlichen konstant aufrechterhalten, so dass die unter Druck stehende Flüssigkeit ringsum in das Flotationsbecken 2 unter Druck stehend eingeleitet werden kann.

Durch die unter Druck stehende Flüssigkeit, welche sich innerhalb des Flotationsbeckens 2 entspannt, wird ein Mikroblaseneffekt bewirkt, welcher Partikel an die Oberfläche der Flüssigkeit im Flotationsbecken 2 mitnimmt. An der Oberfläche der Flüssigkeit bildet sich ein Schaum, nämlich das Flotat 16, in dem Partikel angereichert sind. Der Sättiger 3 ist als Druckbehälter ausgestaltet, der im konkret dargestellten Beispiel an der Außenseite des Flotationsbeckens 2 angeordnet ist.

Fig. 1 zeigt weiter, dass ein Zulaufverteiler 8 zum Einbringen von zu reinigender Flüssigkeit in das Flotationsbecken 2 vorgesehen ist, wobei sich der Zulaufverteiler 8 zumindest teilweise längs einer Außenwand des Flotationsbeckens 2 erstreckt und mit Schlitzen 9 versehen ist. Der Zulaufverteiler 8 ist in die Außenwand integriert. Dies ist insbesondere in Fig. 3 dargestellt.

Fig. 1 zeigt, dass innerhalb des Zulaufverteilers 8 eine Verteilerstruktur 8a vorgesehen ist, um in der Zeichenebene von links einströmende Flüssigkeit über die Länge des Zulaufverteilers 8 zu verteilen. Die Schlitze 9 sind als Längsschlitze ausgebildet, welche derart angeordnet sind, dass die zu reinigende Flüssigkeit unter einem Winkel von 5 bis 50° gegen die Horizontale geneigt in das Flotationsbecken 2 einspritzbar oder einleitbar ist. Durch das homogene Einleiten der zu reinigenden Flüssigkeit wird die bereits im Behälter befindliche Flüssigkeit durchmischt.

In einem oberen Bereich des Flotationsbeckens 2 ist ein Flotaträumer 10 angeordnet. In einem unteren Bereich des Flotationsbeckens 2 ist ein Sedimenträumer 11 angeordnet.

Der Flotaträumer 10 ist eine Art oberes Förderband. Der Flotaträumer 10 weist Schaber auf, welche über die Flüssigkeitsoberfläche streichen und das Flotat 16 einer geneigten oberen Rampe 12 zuführen. Die obere Rampe 12 ist derart lang ausgebildet, dass Flotat 16, welches sich auf der Rampe 12 befindet, entwässert werden kann. An den Flotaträumer 10 schließt sich die obere geneigte Rampe 12 mit einer Länge von 50 bis 80 cm an, auf welche das Flotat 16 durch den Flotaträumer 10 aufbringbar ist.

Es ist auch ein Überlaufwehr 13 in Form eines ersten Beckens vorgesehen, in welches bereits vorgereinigte Flüssigkeit, ein sogenanntes Permeat oder eine Klarphase, hineinströmen kann, bevor diese in ein zweites Becken 14 hineinströmt.

Fig. 1 zeigt weiter, dass oberhalb der oberen Rampe 12 eine Rinne 15 vorgesehen ist, welche als Sedimentverteiler dient. Die Rinne 15 weist Schlitze oder Löcher auf, damit Wasser aus dem Sediment in das Flotationsbecken 2 zurückströmen kann.

Mit Bezug zu Fig. 1 erfolgt ein Reinigungsverfahren bevorzugt wie folgt:
Rohwasser oder Schmutzwasser strömt in der Zeichenebene von links in den Zulaufverteiler 8 und wird von dort in das Flotationsbecken 2 unter einem Winkel eingeströmt.

Aus den Injektionslanzen 6 tritt ein Zweistoffgemisch aus, mikrofeine Gasblasen entstehen und nehmen Partikel mit an die Oberfläche der Flüssigkeit im Flotationsbecken 2.

Dort reichert sich ein Flotat 16 an, welches vom Flotaträumer 10 auf die Rampe 12 und von dort in einen Schlammaustragungsschacht 17 verbracht wird. Von der oberen Rampe 12 läuft zuvor Flüssigkeit zurück in das Flotationsbecken 2.

Das von Flüssigkeit befreite Flotat 16 wird in den Schlammaustragungsschacht 17 gefördert. Die Förderung geschieht durch die Schaber des Flotaträumers 10. Vom Schlammaustragungsschacht 17 wird das Flotat 16 in einen Entwässerungscontainer 25 geführt.

Am Boden des Behälters befindet sich der Sedimenträumer 11, nämlich eine Art unteres Förderband. Der Sedimenträumer 11 räumt Sediment vom Boden des Flotationsbeckens 2 ab und führt dieses auf eine ebenfalls geneigte untere Rampe 11a. Von der unteren Rampe 11a fällt das Sediment in einen Sedimentaustragungsschacht 18.

Von dort wird das Sediment durch einen Schneckenförderer 19 zu einer Sedimentpumpe 20 verbracht, welche das Sediment über eine Sedimentleitung 21 in die Rinne 15 fördert. Dort wird das Sediment wie zuvor beschrieben über Schlitze in der Rinne 15 entwässert.

Die Flüssigkeit rinnt durch die Schlitze in der Rinne 15 auf die obere Rampe 12 und läuft von dort zurück in das Flotationsbecken 2. Von der Rinne 15, welche konkret mit Längsschlitzen versehen ist, fällt das Sediment sodann ebenfalls in den Schlammaustragungsschacht 17 und wird zum Entwässerungscontainer 25 abgeführt.

Aus dem Flotationsbecken 2 strömt eine wässrige Klarphase, das sogenannte Permeat über einen Klarphasenauslauf 22 in das Überlaufwehr 13. Von dort kann das Permeat in das zweite Becken 14 überlaufen. Vom zweiten Becken 14 kann die Klarphase zu einer anderen Anlage geführt werden.

Aus dem Überlaufwehr 13 aber wird ein Teil des Permeats über eine Permeatpumpe 23 zum Sättiger 3 verbracht, wo das Permeat mit Druckuft unter 6 bar beaufschlagt wird.

Die Druckluft wird über eine Druckluftleitung 24 von oben in den Sättiger 3 eingebracht. Am unteren Ende des schräg stehenden Sättigers 3 wird das unter Druck stehende Permeat, wie zuvor beschrieben, in die Leitung 4 und von dort zu den Einspeisern 5 verbracht.

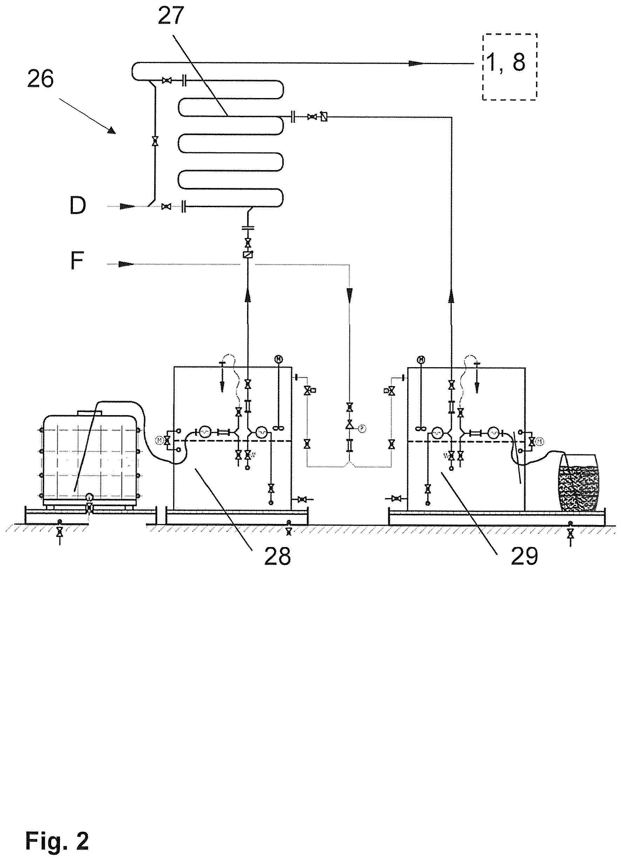

Fig. 2 zeigt eine Anordnung, die der Flotationsvorrichtung 1 vorgelagert ist.

Von einem nicht gezeigten Dickstofftank strömt zu reinigendes Wasser in einen Flockulator 26. Vorteilhafter Weise weist der Flockulator 26 eine geschwungene und gewundene Langleitung 27 auf, in welche Koagulationsmittel von einer Koagulationsmitteldosiereinrichtung 28 eingebracht werden kann.

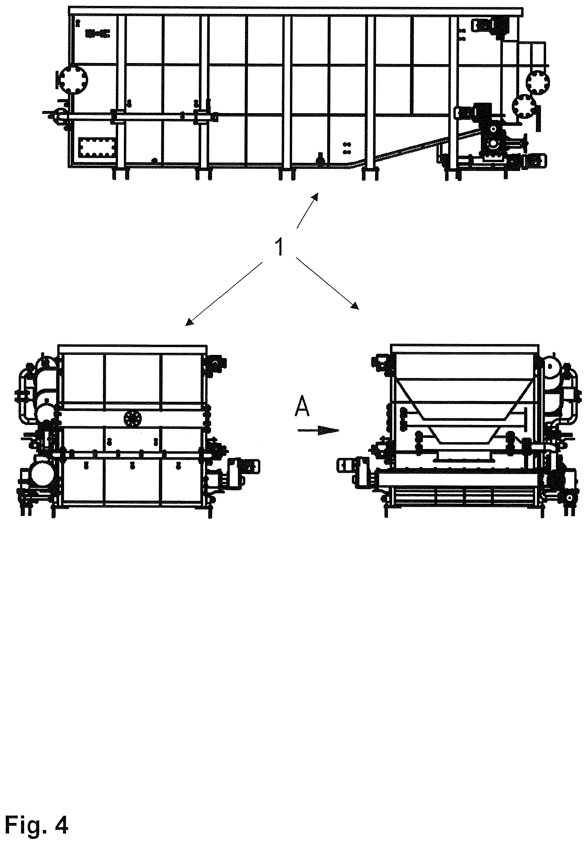

Des Weiteren wird Flockungsmittel von einer Flockungsmitteldosiereinrichtung 29 in das zu reinigende Wasser eingebracht, bevor es zu dem Zulaufverteiler 8 der Flotationsvorrichtung 1 gemäß Fig. 1, 3 oder 4 strömt.

Ein Koagulationsmittel spaltet Bindungen chemisch auf, so dass es zu Agglomerationen von Partikeln in einem zu reinigenden Wasser kommt.

Des Weiteren werden Flockungsmittel oder Flockulationsmittel in die Langleitung 27 eingespeist, wodurch eine physikalische Agglomeration oder ein Ausfallen von Partikeln begünstigt wird.

Das so aufbereitete Wasser wird dann in die hier beschriebene Flotationsvorrichtung 1 gemäß Fig. 1, 3 und 4 eingebracht, welche als HPDF (High Performance Decompression Flotation)-Flotationsvorrichtung ausgestaltet ist.

### Bezugszeichen

- 1: Flotationsvorrichtung
- 2: Flotationsbecken von 1
- 3: Sättiger von 1
- 4: Leitung
- 5: Einspeiser
- 6: Injektorlanze
- 7: Prallblech oder Prallverteiler von 6
- 8: Zulaufverteiler
- 8a: Verteilerstruktur von 8
- 9: Schlitze von 8
- 10: Flotaträumer
- 11: Sedimenträumer
- 12: obere Rampe
- 13: Überlaufwehr, erstes Becken
- 14: zweites Becken
- 15: Rinne
- 16: Flotat
- 17: Schlammaustragungsschacht
- 18: Sedimentaustragungsschacht
- 19: Schneckenförderer
- 20: Sedimentpumpe
- 21: Sedimentleitung zu 15
- 22: Klarphasenauslauf
- 23: Permeatpumpe zu 3
- 24: Druckluftleitung zu 3
- 25: Entwässerungscontainer
- 26: Flockulator
- 27: Langleitung von 26
- 28: Koagulationsmitteldosiereinrichtung
- 29: Flockungsmitteldosiereinrichtung
- 30: Strömungskanal von 5
- 31, 32: Strömungsquerschnittsfläche von 30

## Patentansprüche

1. Flotationsvorrichtung (1), umfassend ein Flotationsbecken (2) zum Aufnehmen von zu reinigender Flüssigkeit und einen Sättiger (3) zum Aufnehmen eines unter Druck stehenden Flüssigkeits-Gas-Gemischs, wobei vom Sättiger (3) eine Leitung (4) zu mindestens einem Einspeiser (5) führt, durch welchen das unter Druck stehende Flüssigkeits-Gas-Gemisch in das Flotationsbecken (2) einleitbar ist, wobei der Einspeiser (5) einen Strömungskanal (30) aufweist, der längs seiner Erstreckung unterschiedliche Strömungsquerschnittsflächen (31, 32) aufweist, und wobei der Einspeiser (5) eine Venturidüse aufweist oder als solche ausgebildet ist, **dadurch gekennzeichnet, dass** sich die Leitung (4) zumindest abschnittsweise um das Flotationsbecken (2) herum erstreckt, wobei die Leitung (4) ohne Zwischenschaltung eines Ventils in mehrere Einspeiser (5) mündet, die voneinander beabstandet an oder in der Außen- oder Innenwand des Flotationsbeckens (2) angeordnet sind, wobei ein oder jeder Einspeiser (5) in eine Injektorlanze (6) mündet, welche in das Innere des Flotationsbeckens (2) ragt, wobei dem in das Innere ragenden Ende der Injektorlanze (6) ein konvexes Prallblech (7), nämlich ein Prallverteiler, zugeordnet ist, und wobei die konvexe Seite des Prallblechs (7) dem Ende der Injektorlanze (6) zugewandt ist.

2. Flotationsvorrichtung nach Anspruch 1, **dadurch gekennzeichnet, dass** ein Zulaufverteiler (8) zum Einbringen von zu reinigender Flüssigkeit in das Flotationsbecken (2) vorgesehen ist, wobei sich der Zulaufverteiler (8) zumindest teilweise längs einer Außen- oder Innenwand des Flotationsbeckens (2) erstreckt und mit Schlitzen (9) versehen ist.

3. Flotationsvorrichtung nach Anspruch 2, **dadurch gekennzeichnet, dass** die Schlitze (9) als Längsschlitze ausgebildet sind, welche derart angeordnet sind, dass die zu reinigende Flüssigkeit unter einem Winkel von 5 bis 50° gegen die Horizontale geneigt in das Flotationsbecken (2) homogen einleitbar ist.

4. Flotationsvorrichtung nach einem der voranstehenden Ansprüche, **dadurch gekennzeichnet, dass** in einem oberen Bereich des Flotationsbeckens (2) ein Flotaträumer (10) angeordnet ist und/ oder dass in einem unteren Bereich des Flotationsbeckens (2) ein Sedimenträumer (11) angeordnet ist.

5. Flotationsvorrichtung nach Anspruch 4, **dadurch gekennzeichnet, dass** sich an den Flotaträumer (10) eine obere geneigte Rampe (12) anschließt, auf welche Flotat (16) durch den Flotaträumer (10) aufbringbar ist.

6. Flotationsvorrichtung nach einem der voranstehenden Ansprüche, **dadurch gekennzeichnet, dass** ein Überlaufwehr (13) als erstes Becken vorgesehen ist, in welches bereits vorgereinigte Flüssigkeit hineinströmen kann, bevor diese in ein zweites Becken (14) hineinströmt.

7. Verwendung einer Flotationsvorrichtung (1) nach einem der voranstehenden Ansprüche in der Holz verarbeitenden Industrie, in Energieerzeugungsanlagen, in der Glas- oder Mineralwolleindustrie oder in der Industrie allgemein.

## Claims

1. Flotation device (1) comprising a flotation tank (2) for receiving liquid to be cleaned, and a saturator (3) for receiving a pressurized liquid/gas mixture, wherein a line (4) leads from the saturator (3) to at least one feeder (5) by way of which the pressurized liquid/gas mixture is able to be directed into the flotation tank (2), wherein the feeder (5) has a flow duct (30) which has different flow cross-sectional areas (31, 32) along its extent, and wherein the feeder (5) has a Venturi valve or is designed as such, **characterized in that** the line (4) extends at least in portions about the flotation tank (2), wherein the line (4) without an intervening valve opens into a plurality of feeders (5) which are disposed so as to be mutually spaced apart on or in the external wall or internal wall of the flotation tank (2), wherein one or each feeder (5) opens into an injector lance (6) which protrudes into the interior of the flotation tank (2), wherein a convex baffle plate (7), specifically a distributor baffle, is assigned to that end of the injector lance (6) that protrudes into the interior, and wherein the convex side of the baffle plate (7) faces the end of the injector lance (6).

2. Flotation device according to Claim 1, **characterized in that** an inlet distributor (8) for introducing liquid to be cleaned into the flotation tank (2) is provided, wherein the inlet distributor (8) extends at least partially along an external wall or internal wall of the flotation tank (2) and is provided with slots (9).

3. Flotation device according to Claim 2, **characterized in that** the slots (9) are designed as longitudinal slots which are disposed in such a manner that the liquid to be cleaned is able to be introduced homogenously into the flotation tank (2) so as to be inclined at an angle of 5 to 50° in relation to the horizontal.

4. Flotation device according to one of the preceding claims, **characterized in that** a floating matter scraper (10) is disposed in an upper region of the flotation tank (2), and/or **in that** a sediment scraper (11) is disposed in a lower region of the flotation tank (2).

5. Flotation device according to Claim 4, **characterized in that** an upper inclined ramp (12), onto which floating matter (16) is able be moved by the floating matter scraper (10), adjoins the floating matter scraper (10).

6. Flotation device according to one of the preceding claims, **characterized in that** an overflow weir (13) is provided as a first tank into which already precleaned liquid can flow before the latter flows into a second tank (14).

7. Use of a flotation device (1) according to one of the preceding claims in the timber processing industry, in power generation plants, in the glass or mineral wool industry, or in industry in general.

## Revendications

1. Dispositif de flottation (1), comprenant un bassin de flottation (2) pour recevoir du liquide à purifier et un saturateur (3) pour recevoir un mélange liquide-gaz sous pression, une conduite (4) menant du saturateur (3) à au moins un alimentateur (5), à travers lequel le mélange liquide-gaz sous pression est apte à être introduit dans le bassin de flottation (2), l'alimentateur (5) présentant un canal d'écoulement (30) qui, le long de son extension, présente différentes surfaces de section d'écoulement (31, 32), et l'alimentateur (5) présentant un venturi ou étant conçu comme tel, **caractérisé en ce que** la conduite (4) s'étend au moins par sections autour du bassin de flottation (2), la conduite (4) débouchant sans interposition d'une vanne dans plusieurs alimentateurs (5) qui sont disposés à distance les uns des autres sur ou dans la paroi extérieure ou intérieure du bassin de flottation (2), un alimentateur (5), ou chaque alimentateur (5), débouchant dans une lance d'injection (6) qui fait saillie à l'intérieur du bassin de flottation (2), une plaque déflectrice convexe (7), à savoir un répartiteur de plaque déflectrice, étant associée à l'extrémité de la lance d'injection (6) qui fait saillie à l'intérieur, et le côté convexe de la plaque déflectrice (7) étant tourné vers l'extrémité de la lance d'injection (6).

2. Dispositif de flottation selon la revendication 1, **caractérisé en ce qu'**un distributeur d'alimentation (8) est prévu pour introduire du liquide à nettoyer dans le bassin de flottation (2), le distributeur d'alimentation (8) s'étendant au moins partiellement le long d'une paroi extérieure ou intérieure du bassin de flottation (2) et présentant des fentes (9).

3. Dispositif de flottation selon la revendication 2, **caractérisé en ce que** les fentes (9) se présentent sous la forme de fentes longitudinales qui sont aménagées de telle sorte que le liquide à épurer est apte à être introduit de manière homogène dans le bassin de flottation (2) en étant incliné d'un angle de 5 à 50° par rapport à l'horizontale.

4. Dispositif de flottation selon l'une des revendications précédentes, **caractérisé en ce qu'**un racleur de flotat (10) est disposé dans une zone supérieure du bassin de flottation (2) et/ou **en ce qu'**un déblayeur de sédiments (11) est disposé dans une zone inférieure du bassin de flottation (2).

5. Dispositif de flottation selon la revendication 4, **caractérisé en ce que** le racleur de flotat (10) est suivi d'une rampe supérieure inclinée (12) sur laquelle le flotat (16) est apte à être appliqué par le racleur de flotat (10).

6. Dispositif de flottation selon l'une des revendications précédentes, **caractérisé en ce qu'**un déversoir (13) est prévu en tant que premier bassin, dans lequel le liquide déjà pré-nettoyé est apte à s'écouler avant que celui-ci ne s'écoule dans un deuxième bassin (14) .

7. Utilisation d'un dispositif de flottation (1) selon l'une des revendications précédentes dans l'industrie de transformation du bois, dans les installations de production d'énergie, dans l'industrie du verre ou de la laine minérale ou dans l'industrie en général.
